# EUROPEAN PATENT APPLICATION

(11) **EP 2 840 537 A2**
(43) Date of publication of application: **25.02.2015**
(21) Application number: 14181584.5
(22) Date of filing: 20.08.2014
(51) Int. Cl.: G06Q 10/08, G06Q 20/00, G06Q 30/02

(54) **Methods and systems for product identifier mapping**

(30) Priority: 21.08.2013 US 201313972370
(71) Applicant: ShopAdvisor, Inc., Concord, MA 01742 (US)
(72) Inventor: Lahtiranta, Atte, Cupertino, CA California 95014 (US); Virtanen, Olli, 01610 Vantaa (FI)
(74) Representative: Hauck Patentanwaltspartnerschaft mbB

(57) **Abstract**

As the web and Internet evolves to supporting e-commerce, many sites offer customers the possibility of purchasing items or products online. Many new web sites have been created that aggregate product descriptions from multiple data sources and present those aggregated descriptions to their online customers with some added value, e.g., the best deal. It is therefore crucial that descriptions of products from different data sources be tested if they refer to the same product. The present invention derives equivalent descriptions from individually presented descriptions where possible using heuristics, healing identifier values, and deriving said equivalences under probability estimations.

## Description

### FIELD OF THE INVENTION

The present invention relates generally to mapping product identifiers for the same products from different sources.

### BACKGROUND OF THE INVENTION

More and more consumer activities on the Internet and particularly in e-commerce involve finding deals about products and items. Several websites aggregate product information from multiple sources to provide deal information to consumers. Implicit in such aggregation activities is the assumption that different product descriptions of the same product in multiple sources can be identified, i.e., mapped.

### SUMMARY OF THE INVENTION

Embodiments of the present invention address deficiencies of the prior art and introduce new technologies to the present art for integrating disparate descriptions of products and items from different data sources. In some cases conflicting identifier data is resolved to accomplish integration under rules of consistency, prior knowledge of data sources, and heuristics. Data healing is undertaken in certain situations so that a resolution of different descriptions may occur.

In one embodiment a method is described that creates a master identifier for uniquely identifying each item in a set of items. This master identifier is created from identifiers provided within the individual descriptions.

In another embodiment a method is described that assigns a score to each identifier comprising the master identifier and further computes a weighted total score for the master identifier. The score of the master identifier may be compared against a pre-determined threshold value to determine potential equivalence of products. The method envisions the use of frequency of occurrence of identifier values in computing the weighted sum values.

In another embodiment a method is described to determine if two or more items in a set of items are potentially distinct items, each item being described by a set of identifiers with values associated therewith, the set of items having a master identifier uniquely identifying each item in the set of items, the master identifier including one or more of the identifiers. The method comprises comparing the master identifiers for the two or more items and determining if the items are distinct items if their master identifiers are neither equal to one another nor consistent with one another. The method further comprises comparing the master identifiers for the two or more items and determining if the items are either equal to one another or consistent with one another in the event that a value for one or more of the input identifiers is unknown, missing or unavailable.

In another embodiment of the invention a method is described that deals with identifier values that are missing, unavailable or unknown. The method assigns values to the missing identifiers in a mutually consistent manner so that equivalence of items can be determined, if possible.

In another embodiment of the invention a method is described that, given an input description, quickly and easily locates potentially equivalent descriptions from a large data store of descriptions. The method assigns bit streams to each stored description and the input description in such a manner that a simple Boolean logic operation yields all the potentially equivalent descriptions to the input description. The method envisions implementing the embodiment in hardware, firmware and/or assembler language instruction sets.

In another embodiment of the present invention a method is described that, given an input description and a collection of potentially equivalent descriptions, checks for the equivalence of descriptions if a consistent set of assignments can be made of values to missing or unavailable identifier values. If such a consistent set of assignments cannot be found the method envisions the use of heuristics to head data and then apply the process of resolving descriptions again. The method further envisions assuming a known identifier value to be erroneous and replacing it with another value, such replacement yielding a consistent assignment of values to identifiers. The method further envisions assigning a probability estimate to a derived equivalence of descriptions.

In another embodiment of the present invention, in order to achieve a possible equivalence of descriptions, a method is described that declares certain identifier values to be erroneous and replaces such values with heuristic estimates to obtain an equivalent description with a probabilistic estimate of correctness.

### BRIEF DESCRIPTION OF THE DRAWINGS

The inventions will now be more particularly described by way of example with reference to the accompanying drawings. Novel features believed characteristic of the inventions are set forth in the claims. The inventions themselves, as well as the preferred mode of use and further objectives and advantages thereof, are best understood by reference to the following detailed description of the embodiment in conjunction with the accompanying drawings, in which:
FIG. 1 describes the overall flow of the method of the present invention.
FIG. 2 shows an example collection of product or item descriptions with identifier values.
FIG. 3 shows the use of relative frequency of occurrence of identifier values, possible combinations of identifiers comprising master identifiers, and a calculation of the total score for master identifiers.
FIG. 4 shows a collection of product descriptions in a data store, an input product description, assignment of bit streams to the input and stored descriptions, and the computation of the Boolean logic operation comparing the input to the stored descriptions.
FIG. 5 describes the method of testing for equivalence of descriptions using the consistency assignment method.
FIG. 6 describes the method of testing for equivalence of descriptions using the data healing method.

### DETAILED DESCRIPTION

### Definitions

In the descriptions that follow, we will adopt the following usage of terms (however, the inventions presented herein shall not necessarily be limited by such usage):

A "product identifier" or "identifier" is an attribute associated with an item such as a product and which is extracted from a description of the item obtained from a data source such as a web site. Examples: UPC, title, price, etc.;

A "master identifier" consists of a particular subset of a set of identifiers that may be used to uniquely identify a product;

A "set of identifiers" or a "plurality of identifiers" (such as used in the product descriptions P1, P2, P3 and P4 shown below) is a group of identifiers describing a product or item;

A "web page", in general, denotes a set of information objects being displayed on a computer monitor and accessible through a web browser such as Internet Explorer;

The term "web page being displayed" will generally refer to the process by which a web browser renders a web page causing it to be displayed on a computer monitor; and

A "website" comprises a collection of web pages at a single internet address, said web pages provided to web browsers by a web server.

The present invention relates to searching and identifying content on the Internet. Recent search requests more generally involve individual products, services and other items. Such requests are expected to increase as electronic commerce activity grows on the Internet. Implicit in such requests is the notion of comparisons of items across websites. For example, in order to find the cost of, say, a flight or a particular television set, various flights and television sets have to be compared across multiple websites. For instance, consumers can be provided with information on the cheapest price for a particular product across multiple merchants (websites) or user comments and other information for that product across multiple data sources. Information about products can be obtained from a wide variety of sources including, e.g., data feeds, APIs, bar codes, user generated data, and data that has been scraped from websites.

A problem with such comparisons is that one must ensure that the same product, service or other item is being compared across different sources.

Individual products, services or other items are identified on a website by using unique identifiers (IDs). Such IDs are often channel, merchant, or manufacturer specific, and thus not global. IDs may also be completely missing as there may be no numbering scheme widely adopted in a particular business segment such as, e.g., artisan/hand crafted products such as wines, among others. Even when products have globally unique identifiers like a UPC (Universal Product Code), an EAN (European Article Number), or a GTIN (Global Trade Item Number), the IDs used for products may be wrong, missing or misplaced.

Consequently, a mapping service is needed to map multiple product descriptions as one when they identify the same product. The mapping service can be used to understand, map and represent deals of products from multiple sources. For example, the mapping service can be used to determine that a price or any other structured or non-structured information from one source is also applicable to the same product having a different or no identifier from another source.

One aspect of the mapping problem is that the mapping process may need to consider thousands or millions of products emanating from various sources such as data feeds, scraped web sites, etc. A new product description may need to be mapped against millions of potential descriptions that will take more time and computer resources.

The present invention provides a solution to the mapping problem in which the number of operations needed to determine a successful or unsuccessful mapping is reduced. Moreover, each operation uses considerably less time and computing resources.

The mapping problem may be stated in abstract terms as follows. We are given a database or a collection, i.e., a large number, of product descriptions that are assumed to describe a variety of products. We are then given a new product description. We are required to determine if the new product description is "equivalent" to any of the descriptions in the collection.

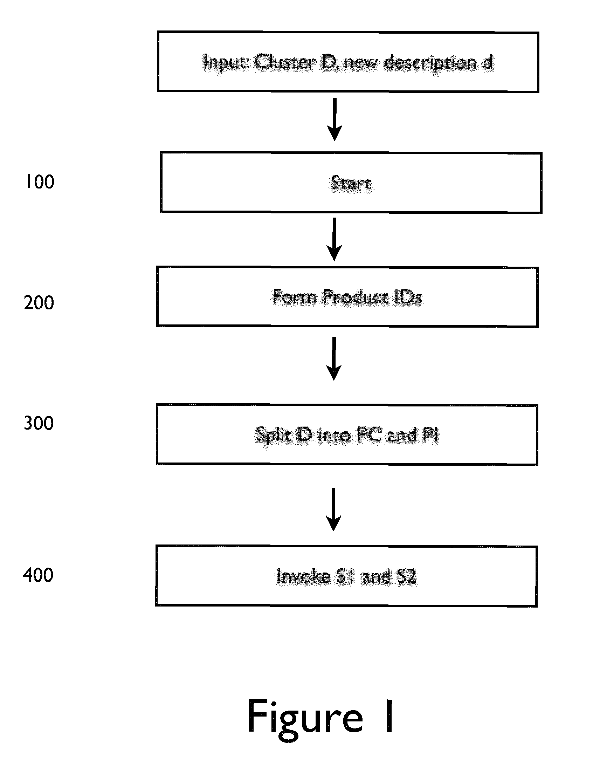

Consider the method depicted in Figure 1. The method starts by appealing to a subordinate method "Forming Product IDs" in step 200. In step 300 the given collection of descriptions is split into two parts, Potentially Consistent (PC) and Potentially Inconsistent (PI), with respect to the product identifiers, as explained below. In step 400 the method invokes two new subordinate methods, S1 and S2, with PC and PI as input, respectively.

### Forming Product IDs

The method of the present invention uses source information and manufacturer and product attributes such as title, historical information such as price, and other real-time and non-real-time pieces of data together to form a master identifier that can be used to globally identify the product or entity in question.

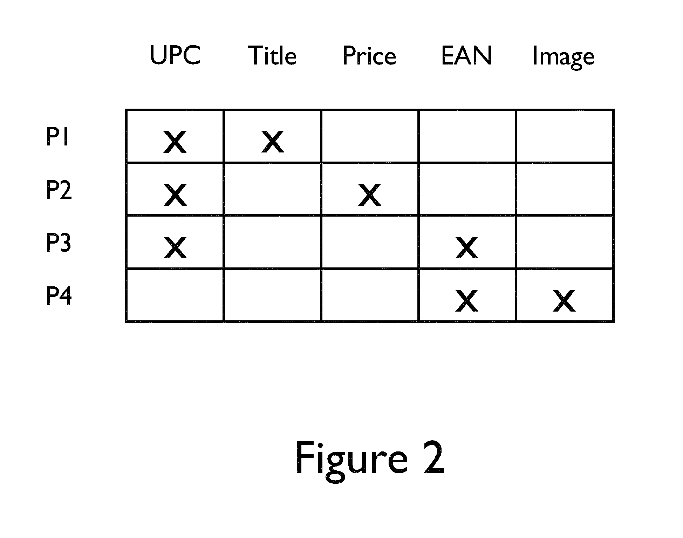

Consider, by way of example, the situation depicted in Figure 2 that shows a table listing the identifiers for four product descriptions P1,P2, P3 and P4. It is of note that some identifiers have values while others do not. There is no assumption being made about the equality or otherwise of the descriptions at this juncture.

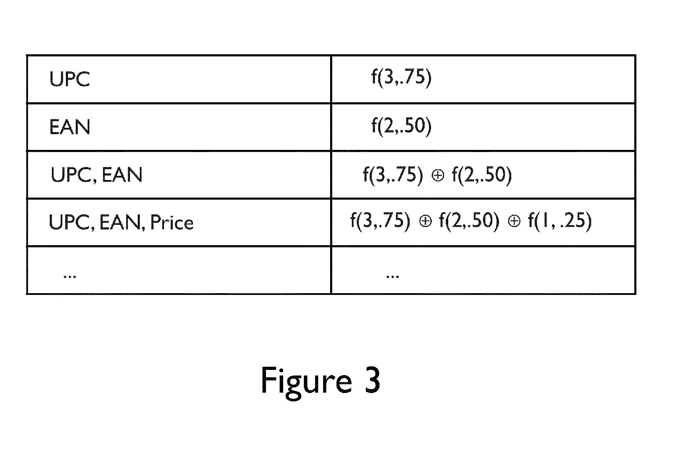

Figure 3 shows various combinations of identifiers that may be considered as Master Identifiers (Master IDs). The method of the present invention uses a sufficiently large sample of product descriptions and identifiers to create a Master ID based, for example, on their relative frequency of occurrence and their total number of occurrences. Thus, in the example of figure 3 UPC has a relative frequency of .75 (3 out of 4) and EAN has a relative frequency of .50 (2 out of 4). The total number of occurrences of UPC is 3 and that of EAN are 2. Using this information the method constructs the combination (UPC, EAN) as a potential Master ID and computes a score associated with this Master ID. In a similar manner all combinations of identifiers in the sample are analyzed and a score is associated with them. The method chooses the combinations with the highest scores as potential Master IDs. The number of combinations chosen is based on a pre-determined and configurable threshold value, e.g., the top ranked 3 combinations.

In Figure 3 the scores of the example Master IDs is shown. When the Master ID consists of more than one identifier, the method may use a weighted sum, , formula to compute the score.

In another embodiment the initial Master ID is based on a selected provider of a product. The selection is based on business motivators and other criteria, such as "source S is known to have reliable descriptions", "using source T implies certain limitations that lower its value as a master identifier", "source U in general gives good Cost-per-Action revenue" etc. The remaining descriptions are then matched against the Master ID, and that match is given a score. If a match score is high enough, the corresponding descriptions are merged and the process continues with the enriched data.

One major use of Master IDs is to determine when two products are distinct or if the descriptions could be merged into a single product. The method of the present invention takes the distinctiveness condition to be true if the Master IDs of the two products cannot be made to agree with each other. For example, if p1 is the product description with Master ID (UPC=123, EAN=456) and the description p2 has the Master ID (UPC=949, EAN=343) then the two Master IDs cannot be equated with each other (unless one or more identifier values are assumed to be incorrect or erroneous). However, if p1 has the Master ID (UPC=123, EAN=unknown) and p2 has the Master ID (UPC=unknown, EAN=456) then we can equate the two Master IDs consistently with each other by assuming that the unknown EAN value is "456" and the unknown UPC value is "123". In other words if there does not exist a substitution of "values" for "unknowns" in two Master IDs that makes them consistent with each other then the two corresponding products are distinct (unless we assume that some identifier values are incorrect). We thus observe that the notion of consistency of two descriptions determines potential compatibility or otherwise of the two descriptions.

In an alternative embodiment the Master ID is an assigned value that collects multiple provider product descriptions into one collection, one of which is the master copy and the others are used to enrich that. Such as master product [UPC = 123, TITLE = xyz], enriched by [UPC = 123, EAN = 456, TITLE = xyz] gives a more complete single description [UPC = 123, EAN = 456, TITLE = xyz].

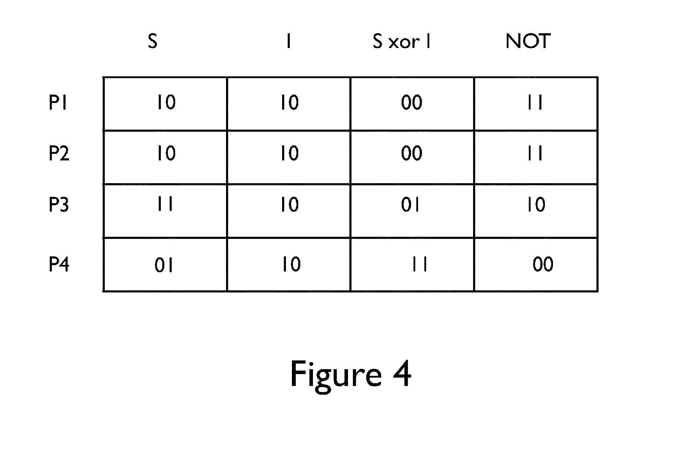

With the above exposition in mind consider Figure 4 derived from Figure 2. As has been explained above, one of the Master IDs for Figure 2 could be taken as the combination of (UPC, EAN). In Figure 4, we create the column "S" (Strings) as follows. If a product description has an identifier contained in the Master ID, the corresponding position contains a 1-byte. Otherwise it contains a 0-byte. Thus, product description p1 has the identifier UPC that is contained in the Master ID (UPC, EAN) but does not contain the identifier EAN; thus, the string S1 associated with p1 is "10". A similar argument holds for p2 whose associated string S2 is also "10". The description p3 contains both UPC and EAN which are also both contained in the Master ID, therefore its string S3 is "11". Finally, the description p4 only contains EAN and hence the associated string S4 is "01".

Now assume the input new description has Master ID (UPC, unknown), i.e., it has an associated string I = "10". Now compute NOT(I XOR S) for each value of column S. The result is shown in the last two columns in Figure 4.

We now make the following definition. If a value in the last column of Figure 4 is identically 0 we will call the corresponding product description "Potentially Consistent" (PC) with the input description. Otherwise the corresponding product description will be called "Potentially Inconsistent" (PI) with the input product description. It should be noted that while this definition of "potentially consistent" represents a sufficient condition to conclude that two or more product descriptions are potentially consistent with one another, it is not a necessary condition. For instance, the two product descriptions A = (UPC=123, EAN=456) and B = (UPC=123, EAN=unknown) are also potentially consistent with one another.

### The Subordinate Methods S1 and S2

The S1 method receives as input a collection of descriptions known as PC and a description known as "input description" and it needs to determine if the elements of the collection are consistent with the input description, i.e., equates the corresponding descriptions. The method operates by utilizing the notion of a substitution. Given an identifier with a known value and another identifier with an unknown value, a substitution replaces the unknown value with the known value. If unknown values cannot be consistently replaced then a substitution does not exist. For example, consider the following potentially consistent descriptions A = (UPC=123, EAN=456) and B = (UPC=123, EAN=unknown). The substitution unknown =456 is consistent. Now consider the case of a third description C = (UPC=123, EAN = 789), which is also potentially consistent with descriptions A and B. There is no consistent assignment of values to the unknown identifier that equates all three descriptions. The merge method operates by finding a consistent substitution that equates the input description with the descriptions in the given group of descriptions. If a consistent substitution does not exist the merge method transitions control to the Heuristic Method and terminates.

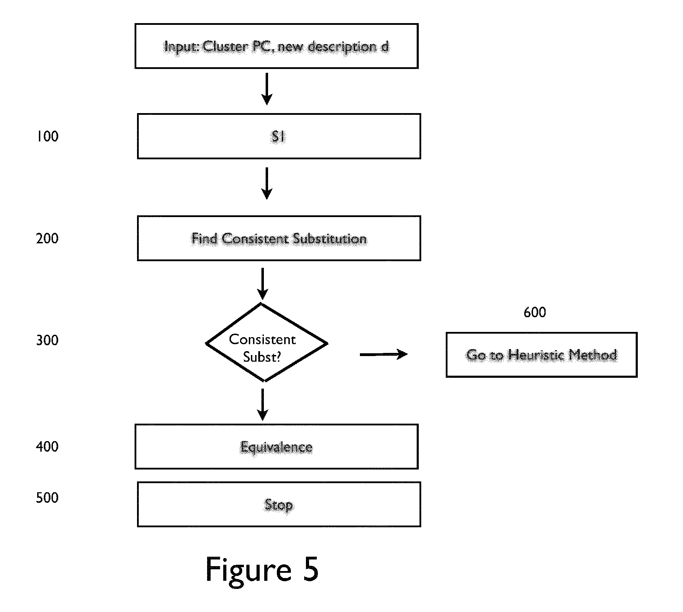

The working of the S1 method as described above is shown in Figure 5. In step 100 the method receives as input a collection of descriptions called PC and a description called the "input description". In step 200 it attempts to find a substitution. If a consistent substitution is found it declares that the input description is equivalent to the group description and terminates (step 500). Otherwise it transitions to the Heuristic Method 600.

### The Method S2

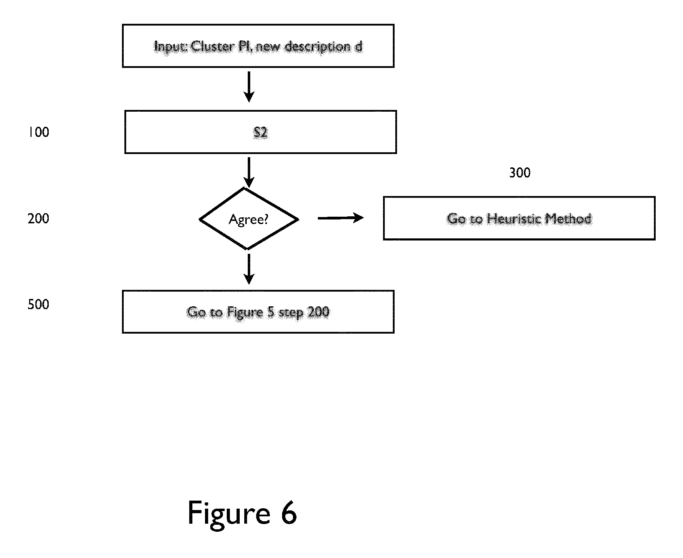

Figure 6 depicts the S2 method. This method receives as input a group of descriptions called the Potentially Inconsistent (PI) group and a new description called the "input description".

In step 100 the method receives the input and in step 200 attempts to determine if the identifier values in the input description and the descriptions in the group PI agree. If no agreement is found, the method transitions to the heuristic method (step 300). Otherwise, in step 500 it transitions to step 200 of Figure 5.

In an alternative embodiment to methods S 1 and S2 the data can be "healed" by replacing values considered erroneous. The Master ID is enriched with known provider data and where new identifiers (ID) are seen, the result can be:
- the ID is added to the Master ID directly (identifier didn't already exist)
- the ID is dropped (same type of identifier exists in merged Master ID, and this ID value is deemed erroneous or inconsequential)
- the ID is added as an alternate to existing values of the same type

An ID with a different value than one already merged into the Master ID will need to overcome a negative matching score by the provider product data having other (stronger) matching values or explicit curation.

The heuristic scoring method is used in all matches of the provider data to the master data.

### Heuristic Method

The heuristic method performs two main functions.

In the first case it receives as input a group of descriptions for whom a consistent substitution has not been found. It is required that either the collection of descriptions be declared as belonging to distinct products or some remedial measure is needed. Consider, by way of example, the following three descriptions, as indicated by their Master IDs, from the above exposition.
A = (UPC=123, EAN=456)
B = (UPC=123, EAN=unknown)
C = (UPC=123, EAN = 789)

There is no consistent substitution that will equate the three descriptions. So, it is possible that we are dealing with three distinct products, or with two distinct products. The latter case can be effectuated by assuming that "unknown" value for the description B has the value 456 which will equate the descriptions A and B. Alternatively, one may assume that the unknown value is 789 which equates the descriptions B and C.

In the second case, the heuristic method receives as input a group of descriptions in which the identifiers values are in disagreement. For example, consider the two descriptions, as indicated by their Master IDs.
A = (UPC=123, EAN=456)
B = (UPC=789, EAN=456)

It is required that the heuristic methods take remedial action and make the descriptions equivalent, or declare them as distinct. In this example one remedial course of action could be to declare one of the UPC values as erroneous, say UPC=789, and assume that it is UPC=123 as a corrected value.

Thus the heuristic method and system is required to make decisions programmatically that are based on assumptions regarding missing identifier values, or incorrect identifier values, etc. The heuristic system creates a "quantifiable probability" between the matches from the sources. The probability differs between the data and the source. The probability is calculated and is based on mathematical formula involving confidence in decisions based on prior known decisions. One such form of conditional probabilistic reasoning is derived from Bayes Theorem.

By way of example, the probability calculation can take into account the following:

If the method receives a globally unique identifier, it gives a strong weighting to the probability, e.g., UPC or GTIN can get scores of 80.

If the method receives manufacturer's part number that is only locally relevant and re-used many times, it gives it a lower score, e.g., 20.

If the method receives different identifiers, the same score can be used, but as negative, e.g., if the UPC does not match the score is -80.

if the method receives product title, manufacturer's business entity name, category, price or other such identifier values, the method uses heuristics to determine the score. The score depends on the strength of the match. The scores can be tuned and weighted based on historical information, categories and price points. The method and system supports the tuning of these scores and weights.

The method has a tunable threshold to decide if two product descriptions are of the same product. If the score is below the threshold the mapping does not occur. If the score is above the threshold the mapping occurs and identifiers, attributes, and other structured and non-structured data is mapped into the same product cluster.

The heuristic method and system allows manual curation. Descriptions may be declared explicitly to belong to, or not belong to a specific cluster.

The mapping methods described above may be implemented in software, hardware, firmware or any combination thereof. The processes are preferably implemented in one or more computer programs executing on a programmable computer system including a processor, a computer-readable storage medium readable by the processor (including, e.g., volatile and non-volatile memory and/or storage elements), and input and output devices. Each computer program could be a set of instructions in a code module resident in random access memory of the computer. Until required the program instructions could be stored in another computer memory (e.g., in a hard drive, or in a removable memory such as an optical disk, external hard drive, memory card, or flash drive) or stored on another computer system and downloaded via the Internet or some other network.

Accordingly, the foregoing descriptions and attached drawings are by way of example only, and are not intended to be limiting.

While the present inventions have been illustrated by a description of various embodiments and while these embodiments have been set forth in considerable detail, it is intended that the scope of the inventions be defined by the appended claims. Those skilled in the art will appreciate that modifications to the foregoing preferred embodiments may be made in various aspects. It is deemed that the spirit and scope of the inventions encompass such variations to be preferred embodiments as would be apparent to one of ordinary skill in the art and familiar with the teachings of the present application.

Additionally, elements and components described herein may be further divided into additional components or joined together to form fewer components for performing the same functions.

Accordingly, the foregoing description is by way of example only, and is not intended to be limiting.
Further embodiments of the invention are listed in the following numbered paragraphs.
1. A method of creating a master identifier for uniquely identifying each item in a set of items, comprising:
   extracting from a description of each item in the set one or more identifiers respectively associated with the items;
   selecting one or more identifiers from among the extracted identifiers, each of the items being associated with at least one of the plurality of identifiers;
   combining the selected identifiers to create the master identifier.
2. The method of paragraph 1 wherein selecting the one or more identifiers includes assigning an individual score to each of the identifiers.
3. The method of paragraph 2 wherein selecting the one or more identifiers further includes selecting the one or more identifiers so that a total score obtained by combining the individual scores exceeds a threshold level.
4. The method of paragraph 2 wherein assigning the individual score to each of the identifiers includes assigning the individual scores based on a relative and total frequency of occurrence of the identifiers among all the items.
5. The method of paragraph 3 wherein the total score is based on a weighted sum of the individual scores.
6. The method of paragraph 1 further comprising:
   receiving a web page over a communications network, the web page including the description of at least one of the items; and
   extracting the description of the item from the web page.
7. The method of paragraph 1 wherein at least one of the items is a product available to be purchased or otherwise acquired.
8. The method of paragraph 1 wherein at least one of the identifiers is selected from the group consisting of a UPC (Universal Product Code), an EAN (European Article Number), and a GTIN (Global Trade Item Number).
9. The method of paragraph 1 wherein at least one of the identifiers is selected from the group consisting of a price, title and image.
10. The method of paragraph 4 wherein assigning the individual scores includes assigning a higher score to a first identifier extracted from a first description provided by a first data source that has been predetermined to be more reliable than a second identifier extracted from a second description provided by a second data source that has been predetermined to be less reliable
11. A computer-readable storage medium containing instructions which, when executed by one or more processors, performs a method for determining if two or more items in a set of items are potentially distinct items, each item being described by a set of identifiers with values associated therewith, the set of items having a master identifier uniquely identifying each item in the set of items, the master identifier including one or more of the identifiers, comprising:
   comparing master identifiers for the two or more items by determining if values for corresponding identifiers in the master identifiers are either (i) equal to one another or (ii) consistent with one another in the event that a value for one of more of the input identifiers for the corresponding identifiers is unknown or unavailable; and
   determining that the two or more items are distinct items if the master identifiers for the two items are neither equal to one another nor consistent with one another.
12. The computer-readable storage medium of paragraph 11 wherein the corresponding identifiers in the master identifiers are consistent with one another if there are values that can be assigned to the unknown or unavailable values that make the master identifiers the same.
13. The computer-readable storage medium of paragraph 11 further comprising creating the master identifier for at least a first of the two or more items by extracting a first set of one or more identifiers associated with the set of items from a description of each item in the set, selecting one or more identifiers from among the extracted identifiers, and combining the selected identifiers to create the master identifier.
14. A method of determining if a new item is potentially the same as one or more items in a set of items, each item in the set being described by a plurality of input identifiers associated therewith, comprising:
   extracting from a description of the new item one or more new identifiers associated with the new item;
   comparing the new identifiers to each of the plurality of input identifiers for the items in the set of items, where the identifiers being compared are limited to those identifiers included in a master identifier, the master identifier uniquely identifying each item in the set of items, the master identifier including one or more of the input identifiers; and
   determining that the new item is potentially the same as a particular one of the items if the new identifiers have no identifiers in common with the plurality of input identifiers for the particular item.
15. The method of paragraph 14 wherein the comparison is performed by assigning a first set of bitstreams to results arising from a comparison of each of the input identifiers for the set of items to each of the input identifiers included in the master identifier and assigning a second set of bitstreams to results arising from a comparison of each of the input identifiers for the set of items to the new identifiers associated with the new item.
16. The method of paragraph 15 further comprising comparing the first bitstream to the second bitstream to determine that the new item is potentially the same as a particular one of the items.
17. The method of paragraph 16 wherein comparing the first bitstream to the second bitstream includes performing an exclusive logical-OR operation on the first and second bitstreams.
18. The method of paragraph 17 wherein comparing the first bitstream to the second bitstream includes performing the logical negation operation on the exclusive logical-OR operation on the first and second bitstreams.
19. A method of determining if a new item is potentially the same as items in a set of items that are assumed to be potentially the same, each item in the set of items being described by a plurality of identifiers associated therewith, comprising:
   receiving one or more new identifiers associated with the new item;
   comparing each of the new identifiers to corresponding ones of the plurality of identifiers in the set of identifiers to determine if values for the corresponding identifiers are either (i) equal to one another or (ii) consistent with one another in the event that a value for one or more of the corresponding identifiers is unknown or unavailable; and
   determining that the new item is potentially the same as the items in the set of items if values for each of the corresponding identifiers are either equal to one another or consistent with one another.
20. The method of paragraph 19 wherein the values for the corresponding identifiers are consistent with one another if there are values that can be assigned to the unknown or unavailable values that make the corresponding identifier values the same.
21. The method of paragraph 19 wherein the values for the corresponding identifiers are found to be inconsistent with one another and further comprising applying one or more heuristics to determine if the new item is potentially the same as the items in the set of items.
22. The method of paragraph 21 wherein applying one or more heuristics includes declaring erroneous a value for one of the corresponding identifiers and replacing the erroneous value with a different value that makes the values for the corresponding identifiers consistent with one another.
23. The method of paragraph 21 further comprising assigning a probability reflecting a likelihood that the new items is potentially the same as the item in the set of items, the probability being determined at least in part on whether one of the identifiers is a globally unique identifier or a locally unique identifier.
24. A method of determining if a new item is potentially the same as an item in a set of items that are assumed to be potentially different from one another, each item in the set of items being described by a plurality of identifiers, comprising:
   (a) receiving one or more new identifiers associated with the new item;
   (b) comparing each of the new identifiers to corresponding ones of the plurality of identifiers in the set of identifiers to determine if values for the corresponding identifiers are equal to one another; and
   (c) determining that the new item is potentially the same as a particular one of the items in the set of items if values for each of the corresponding identifiers associated with the new item and the particular item are equal to one another.
25. The method of paragraph 24 wherein if the new item is not determined in step (c) to be potentially the same as any of the items in the set of items and a value for one or more of the corresponding identifiers is unknown or unavailable, determining that the new item is potentially the same as a given one of the items in the set of items if there are values that can be assigned to the unknown or unavailable values that make the corresponding identifier values for the new item and the given item the same.
26. The method of paragraph 25 wherein the corresponding identifiers are found to be inconsistent with one another and further comprising applying one or more heuristics to determine if the new item is potentially the same as one of the items in the set of items.
27. The method of paragraph 26 wherein applying one or more heuristics includes declaring erroneous a value for one of the corresponding identifiers and replacing the erroneous value with a different value that makes the corresponding identifiers consistent with one another.
28. The method of paragraph 26 further comprising assigning a probability reflecting a likelihood that the new item is potentially the same as one of the items in the set of items, the probability being determined at least in part on whether one of the identifiers is a globally unique identifier or a locally unique identifier.

## Claims

1. A method of creating a master identifier for uniquely identifying each item in a set of items, comprising:
extracting from a description of each item in the set one or more identifiers respectively associated with the items;
selecting one or more identifiers from among the extracted identifiers, each of the items being associated with at least one of the plurality of identifiers;
combining the selected identifiers to create the master identifier.

2. The method of claim 1 wherein selecting the one or more identifiers includes assigning an individual score to each of the identifiers.

3. The method of claim 2 wherein selecting the one or more identifiers further includes selecting the one or more identifiers so that a total score obtained by combining the individual scores exceeds a threshold level.

4. The method of claim 2 wherein assigning the individual score to each of the identifiers includes assigning the individual scores based on a relative and total frequency of occurrence of the identifiers among all the items.

5. The method of claim 3 wherein the total score is based on a weighted sum of the individual scores.

6. The method of claim 1 further comprising:
receiving a web page over a communications network, the web page including the description of at least one of the items; and
extracting the description of the item from the web page.

7. The method of claim 1 wherein at least one of the items is a product available to be purchased or otherwise acquired.

8. The method of claim 1 wherein at least one of the identifiers is selected from the group consisting of a UPC (Universal Product Code), an EAN (European Article Number), and a GTIN (Global Trade Item Number).

9. The method of claim 1 wherein at least one of the identifiers is selected from the group consisting of a price, title and image.

10. The method of claim 4 wherein assigning the individual scores includes assigning a higher score to a first identifier extracted from a first description provided by a first data source that has been predetermined to be more reliable than a second identifier extracted from a second description provided by a second data source that has been predetermined to be less reliable

11. A computer-readable storage medium containing instructions which, when executed by one or more processors, performs a method for creating a master identifier for uniquely identifying each item in a set of items, comprising:
extracting from a description of each item in the set one or more identifiers respectively associated with the items;
selecting one or more identifiers from among the extracted identifiers, each of the items being associated with at least one of the plurality of identifiers;
combining the selected identifiers to create the master identifier.
